# EUROPEAN PATENT APPLICATION

(11) **EP 1 952 702 A1**
(43) Date of publication of application: **06.08.2008**
(21) Application number: 06823486.3
(22) Date of filing: 21.11.2006
(51) Int. Cl.: A23L 1/10, C12C 1/02, C12C 1/027, C12C 1/067

(54) **METHOD OF SOAKING CEREAL GRAINS IN WATER AND SOAKING APPARATUS**

(30) Priority: 25.11.2005 JP 2005340844
(71) Applicant: Sapporo Breweries Limited, Tokyo 150-8522 (JP)
(72) Inventor: KISHINAMI, Isao, Tokyo 150-8522 (JP)
(74) Representative: Vossius & Partner
(86) International application number: PCT/JP2006/323199
(87) International publication number: WO 2007/060942

(57) **Abstract**

The method of soaking grains in water of the invention is a method of soaking grains in water for adding moisture to grains for germination, wherein grains are soaked in water containing microbubbles with bubble diameters of no greater than 50 µm.

## Description

### Technical Field

The present invention relates to a method of soaking grains in water and soaking apparatus for adding moisture to grains prior to germination.

### Background Art

Germinated seeds including grains such as rice, wheat and barley and legumes such as soybean, mung bean and alfalfa are widely used as intermediate materials primarily for foods and beverages. In order to obtain such germinated grains or legumes it is necessary to supply sufficient moisture to their seeds (kernels) before germinating, and this is usually accomplished by soaking treatment in which the seeds are soaked in water. It is also necessary to supply sufficient oxygen for germination in addition to moisture, in order to promote germination.

For example, in the production of malt used as a starting material for beer and the like from barley, the pretreatment for malting supplies moisture and oxygen to the barley by multiple alternate repetitions of a step of soaking the barley in steeping water (hereinafter also referred to as "soaking step") and a step of removing the barley from the steeping water and allowing it to drain (hereinafter also referred to as "draining step") (see Patent document 1 and Non-patent documents 1 and 2, for example).

[Patent document 1] Japanese Unexamined Patent Publication
[Non-patent document 1] Dennis E. Briggs, Chapter 3 "Grain Physiology" 3.4" Water uptake by Grains", In Malts and Malting, Blackie Academic & Professional, pp.88-96, London(1998)
[Non-patent document 2] Wolfgang Kunze, 2" Herstellen des Malzes" 2.3" Weichen der Grerste", In Technologie Brauer und Malzer, 7., Volling Neu Bearbeitete Auflage, Versuchs-und-Lehranstalt fur Braureei in Berlin (VLB), pp.104-112, Berlin (1994)

### Disclosure of the Invention

### Problem to Be Solved by the Invention

In industries that utilize germinated grains and legumes, including the industries of beverages such as beer, it is a desirable goal to shorten the time required for pretreatment to improve production efficiency.

However, the aforementioned process of the prior art (hereinafter also referred to as "conventional steeping process") requires a long time (about 3 days) for supply of the target level of moisture to the seeds, and it has been difficult to shorten this time. Reducing the number of draining steps or the standing time in the conventional steeping process, for example, interferes with the normal germinating process of the treated grains.

It is an object of the present invention, which has been accomplished in light of these issues of the prior art, to provide a method of soaking grains in water that allows the desired amount of moisture to be added to grains for germination in a shorter period of time without interfering with the normal germinating process, as well as a soaking apparatus used for the method.

### Means for Solving the Problems

In order to achieve the object stated above, the invention provides a method of soaking grains in water for adding moisture to grains for germination, the method being characterized by soaking grains in water containing microbubbles with bubble diameters of no greater than 50 um.

According to the invention, "grains for germination" include seeds (kernels) of germinating grains such as rice, wheat and barley, as well as legumes such as soybean, mung bean and alfalfa.

By soaking grains in water containing microbubbles with bubble diameters of no greater than 50 µm according to the grain soaking method of the invention, it is possible to supply sufficient oxygen required for germination without the draining step that has been essential in the prior art. In other words, since the method involves only a continuous soaking step without interfering with the normal germinating process of the grains, it is possible to supply the desired level of moisture to the grains for germination in a shorter period of time.

Moreover, by using the microbubbles in the grain soaking method of the invention, it is possible to provide a sufficient supply of oxygen necessary for germination while removing detrimental carbon dioxide from the soaking grains. This effect is thought to be exhibited because the presence of the microbubbles in the system in which the grains are soaked promotes diffusion of dissolved carbon dioxide gas, so that the carbon dioxide gas produced by respiration of the grains is rapidly released out of the system.

In addition, the temperature of the soaking water can be increased for the soaking step in the grain soaking method of the invention, thus allowing the time required for pretreatment to be further shortened. It is well known that the moisture absorption rate of plant seeds is accelerated by high temperature (Dennis E. Briggs, Chapter 3 "Grain physiology", 3.4 "Water uptake by grains", pp.88-96, In Malts and Malting, Blackie Academic & Professional, London(1998)). However, when the temperature of the soaking water is increased for the soaking step in the conventional steeping process, the temperature of the seeds themselves can rise above the physiological temperature range due to heat of germination in the subsequent draining step, since no water is present around the seeds, and this can result in destruction of the seeds. The temperature of the water used for soaking must therefore be kept at a relatively low temperature (normally no greater than 16°C). The method of soaking grains in water of the invention, in contrast, allows the soaking step to be carried out continuously without a draining step, so that the temperature of the soaking water can be raised to high temperatures that have not been possible in the prior art (from 21°C to 35°C), thus permitting the prescribed level of moisture to be supplied to the grains in a much shorter time than in the prior art.

The grains are preferably soaked continuously in water during this step of the grain soaking method of the invention. That is, since there is no repetition of the soaking and draining steps, it is possible to simplify the pretreatment step and thus drastically improve the production efficiency for germinated grains. The process providing this effect was devised based on the knowledge of the present inventors that soaking grains in water containing microbubbles with bubble diameters of no greater than 50 µm can adequately ensure that the normal grain germination process occurs even when continuously carrying out only a soaking step up to the prescribed moisture content.

The temperature of the water used for soaking of the grains in the grain soaking method of the invention is preferably between 21°C and 35°C. Conducting the soaking step in this temperature range will allow the prescribed level of moisture to be supplied to the grains in a much shorter time than by the prior art without interfering with the normal process of germination.

From the viewpoint of further shortening the pretreatment time while ensuring quality of the grains, the water temperature is more preferably 25-35°C and most preferably 28-32°C.

The invention further provides a soaking apparatus used for adding moisture to grains for germination, the soaking apparatus comprising a vat which holds the grains and soaking water, microbubble generating means that generates microbubbles with bubble diameters of no greater than 50 µm in the soaking water, a circulation line having one end connected to the vat and the other end connected to the microbubble generating means, which supplies the soaking water in the vat to the microbubble generating means, and a supply line having one end connected to the soaking water outlet of the microbubble generating means and the other end connected to the vat, for supply of the microbubble-containing soaking water to the vat.

The soaking apparatus allows the grain soaking method of the invention to be carried out so that the desired level of moisture can be supplied to the grains in a short period of time without interfering with the normal process of germination. The circulation line of the soaking apparatus permits water containing microbubbles with bubble diameters of no greater than 50 µm to be continuously and efficiently supplied to the grains, so that the germinated grain production cost can be even further reduced.

The soaking apparatus of the invention preferably further comprises soaking water temperature adjusting means that includes heating means to increase the temperature of the soaking water in the vat and cooling means to cool the soaking water in the vat, and temperature control means that controls the soaking water temperature adjusting means to keep the soaking water in the vat at a prescribed temperature. This will allow soaking to be accomplished while keeping the temperature of the water in the vat at the prescribed temperature, so that the prescribed level of moisture can be supplied to the grains in a much shorter period of time than in the prior art, without interfering with the normal process of germination.

### Effects of the Invention

According to the invention there is provided a method of soaking grains in water that allows the desired amount of moisture to be added to grains for germination in a shorter period of time without interfering with the normal germinating process, as well as a soaking apparatus used for the method. The invention can therefore reduce production costs for germinated grains.

### Brief Description of the Drawings

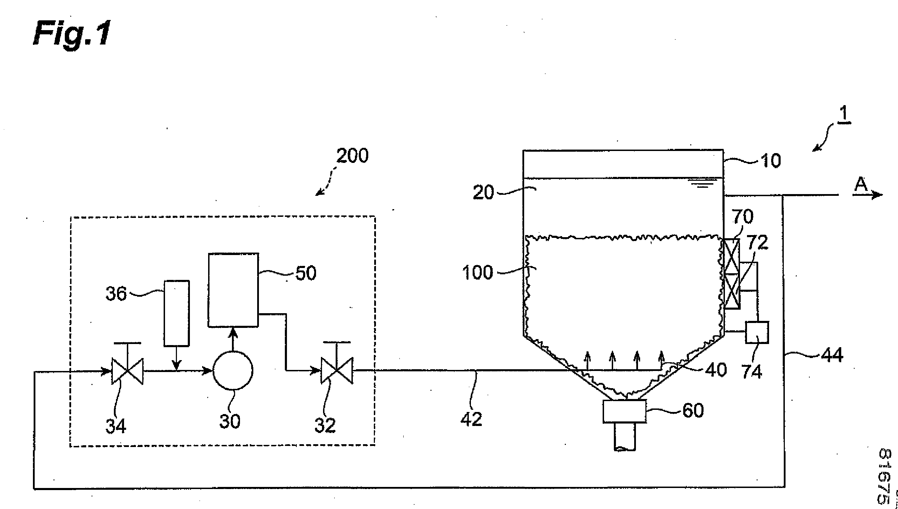

Fig. 1 is a schematic diagram of a preferred embodiment of the soaking apparatus of the invention.

### Explanation of Symbols

1: Soaking apparatus, 10: steeping water vat, 20: steeping water, 30: vortex (microbubble-generating) pump, 32: pressure control valve, 34: negative pressure adjustment valve, 36: air intake, 40: ejection nozzles, 42: supply line, 44: circulation line, 50: excess air separation tank, 60: grain discharge gate, 100: barley.

### Best Modes for Carrying Out the Invention

Preferred embodiments of the invention will now be explained in detail, with reference to the accompanying drawings.

### <Soaking apparatus>

Fig. 1 is a schematic diagram of a preferred embodiment of the soaking apparatus of the invention. The soaking apparatus 1 shown in Fig. 1 comprises a steeping water tank (vat) 10 holding steeping water 20 and barley (grains) 100, a microbubble generating apparatus 200 that produces water containing microbubbles with bubble diameters of no greater than 50 µm, a supply line 42 for supply of the microbubble-containing water from the exit port of the microbubble generating apparatus 200 to the steeping water tank 10, and a circulation line 44 that supplies the steeping water 20 in the steeping water tank 10 to the microbubble generating apparatus 200. In this soaking apparatus 1, the supply line 42 and circulation line 44 circulate the steeping water between the steeping water tank 10 and microbubble generating apparatus 200. Microbubbles are thus generated in the steeping water being circulated by the microbubble generating apparatus 200.

The microbubble generating apparatus 200 has a construction with a negative pressure adjustment valve 34, air intake 36, vortex (microbubble generating) pump 30, excess air separation tank 50 and pressure control valve 32 connected in that order from the upstream end of the steeping water flow.

At the microbubble generating apparatus 200, water fed from the negative pressure adjustment valve 34 end is mixed with air fed from the air intake 36 end to generate air bubbles, and stirring force from the vortex (microbubble generating) pump 30 promotes shearing of the air bubbles causing their fragmentation. Passing of the microbubble-containing water through the excess air separation tank 50 removes the excess air (air not present as air bubbles, and large-sized air bubbles), and after adjustment to the prescribed discharge pressure by the pressure control valve 32 it is directed to the supply line 42 and injected into the steeping water vat 10 from ejection nozzles 40 provided at the bottom of the steeping water vat 10.

Water containing microbubbles with air bubble diameters of no greater than 50 µm can be produced by regulating the negative pressure adjustment valve 34 or air intake 36 for appropriate adjustment of the water and air supply volumes. Specifically, the introduced water may be adjusted to negative pressure by the negative pressure adjustment valve 34 while the air stream flow is regulated by the air intake 36, thus allowing the air bubble diameters to be obtained in a more preferred range.

In the soaking apparatus 1 there are provided around the steeping water vat 10 a heater 70 that raises the temperature of the steeping water 20 and a cooler 72 that cools the steeping water 20, with a temperature controller 74 also provided in electrical connection with the heater 70 and cooler 72. The temperature controller 74 monitors the temperature of the steeping water 20 based on a set temperature, and operates the heater 70 and cooler 72 to keep the steeping water 20 at the prescribed temperature. The controller allows soaking to be carried out while keeping the steeping water 20 at the prescribed temperature.

The circulation line 44 has a conduit for external discharge of excess water in the steeping water vat 10 (arrow A in Fig. 1).

While not shown in Fig. 1, the soaking apparatus 1 also comprises an outlet for discharge of the steeping water 20 in the steeping water vat 10, and a steeping water inlet for introduction of steeping water into the soaking apparatus 1. The outlet is provided at the lower end of the steeping water vat 10, while the steeping water inlet is provided in connection with the supply line 42. However, there are no limitations on the positioning of the outlet and steeping water inlet. For example, the steeping water inlet may be provided in the steeping water vat 10 or in the circulation line 44 before the negative pressure adjustment valve 34.

### <Method of soaking grains in water>

As a preferred mode of the method of soaking grains in water of the invention there will now be described a method of soaking barley as a starting material for beer using a soaking apparatus as shown in Fig. 1.

Fig. 1 shows a state where the barley 100 and steeping water 20 have already been loaded, but the method of soaking grains in water of the invention may instead be carried out by first filling the steeping water vat 10 with a prescribed amount of steeping water 20 with the grain discharge gate 60 closed. The steeping water 20 is supplied to the microbubble generating pump 30 by the circulation line 44 while regulating the pressure control valve 32, negative pressure adjustment valve 34 and air intake 36 to generate microbubbles with bubble diameters of no greater than 50 µm in the steeping water, and the microbubble-containing steeping water is then supplied from the supply line 42 to the steeping water vat 10 through the ejection nozzles 40. By thus circulating the steeping water 20 through the steeping water vat 10 and microbubble generating pump 30, microbubble-containing steeping water is constantly fed to the sleeping water vat.

The heater 70 and cooler 72 are opened based on the temperature set by the temperature controller 74 to consistently maintain the steeping water 20 in the steeping water vat 10 at the prescribed temperature. The temperature of the steeping water 20 is preferably 21-35°C, more preferably 25-35°C and most preferably 28-32°C, from the viewpoint of maintaining sufficient malt quality while further shortening the soaking time.

Next, the prescribed amount of barley is loaded into the steeping water 20 in the steeping water vat 10. The amount of barley and steeping water in the steeping water vat 10 may be appropriately adjusted depending on the type of steeping water vat 10 used, so that all of the soaking barley is immersed in the steeping water to allow uniform addition of moisture to the barley. Barley can generally be sufficiently soaked by using 1.2-2.0 t of steeping water per ton of barley.

After loading the barley, soaking of the barley is prolonged while continuing to supply the microbubble-containing water and monitor the temperature of the steeping water 20.

Upon completion of the barley soaking, the steeping water 20 in the steeping water vat 10 is discharged and the grain discharge gate 60 is opened to remove the barley.

The barley obtained by this soaking method is then supplied to a malting step.

The invention may be implemented in various modes, without being limited to the embodiment described above.

### Examples

The present invention will now be explained in greater detail through the following examples, with the understanding that these examples are in no way limitative on the invention.

### (Example 1): Continuous soak steeping process

First, a soaking apparatus having the same construction as shown in Fig. 1 was prepared. The microbubble generating apparatus used was a Nikuni turbo-mixer by Nikuni Co., Ltd. (Model M20NP07F02H-D, pressurized water flow rate: 1.0 m³/h, motor power: 0.75 kw), with the discharge pressure set to 0.4 MPa, the negative pressure of the introduced water set between -0.02 and -0.04 MPa and the air flow rate set to 2-4 L/min, for generation of microbubbles in the water. Also, microbubble-containing water was supplied from below the steeping water vat while steeping water was circulated between the steeping water vat and microbubble generating apparatus to constantly supply the microbubble-containing water to the steeping water vat. The water circulating flow rate was 1.0 m³/hr and the water temperature in the steeping water vat was kept at 16°C. The bubble diameters of the microbubbles were ≤50 µm.

In a steeping water vat filled with 10 L of microbubble-containing water there was loaded 5 kg of Ryofuu brewing beer barley (2004 product of Western Abashiri, Hokkaido, 11.0% crude protein, 11.5% moisture content, 99% germination rate, 99% particle size adjustment ratio), and the barley was soaked. The barley was steeped to 45% and steeping was continued in that condition.

The degree of steeping of the barley (moisture content) was confirmed by sampling the soaking barley every 6 hours for the first 12 hours and every 3 hours thereafter, and then every hour upon approaching the prescribed degree of steeping, and performing measurement by the 120°C drying method.

The steeping time for a steeping degree of 45% was 3 8 hours.

### (Comparative Example 1): Conventional steeping (soaking/draining) process

Ryofuu brewing beer barley was steeped to 45% using a conventional soaking process with alternate repetition of a step of soaking the barley in steeping water (soaking) and a step of removing the barley from the steeping water and allowing it to drain (draining). The steeping water temperature was kept constant at 16°C.

The steeping scheme used was 10 hr (soaking)-8 hr (draining)-8 hr (soaking)-6 hr (draining)-4 hr (soaking)-6 hr (draining)-4 hr (soaking)-6 hr (draining)-4 hr (soaking)-4 hr (draining)-1 hr (soaking), and a total of 61 hours was required to reach a steeping degree of 45%.

The results for Example 1 and Comparative Example 1 are shown in Table 1.

**[Table 1]**

| | Tune required for steeping to reach a steeping degree of 45% (hr) |
|---|---|
| Example 1 (Continuous soak steeping) | 38 |
| Comp. Example 1 (Conventional steeping (soaking/draining) process) | 61 |

As seen in Table 1, it was confirmed that the continuous soak steeping process of Example 1 was able to accomplish steeping to 45% in approximately 60% of the time required using the conventional steeping (soaking/draining) process. With the method of soaking grains in water of the invention, therefore, it is possible to sufficiently shorten the time required for pretreatment of grains for germination and thus achieve increased production efficiency for malting.

### (Example 2)

Barley was steeped to 42% in the same manner as Example 1, except that the water temperature in the steeping water vat was kept at 30°C. The steeping time was 22 hours.

### (Example 3)

Barley was steeped to 42% in the same manner as Example 2, except that Amagi Nijo brewing beer barley (2004 product of Oota, Gunma, 9.3% crude protein, 12.5% moisture content, 98% germination rate, 99% particle size adjustment ratio) was used instead of Ryofuu brewing beer barley. The steeping time was 14 hours.

### (Comparative Example 2)

Ryofuu brewing beer barley was steeped to 42% using a conventional soaking process with alternate repetition of a step of soaking the barley in steeping water (soaking) and a step of removing the barley from the steeping water and allowing it to drain (draining). The steeping water temperature was kept constant at 16°C.

The steeping scheme was 10 hr (soaking)-8 hr (draining)-8 hr (soaking)-6 hr (draining)-4 hr (soaking)-6 hr (draining)-4 hr (soaking), and a total of 46 hours was required to reach a steeping degree of 42%.

### (Comparative Example 3)

Amagi Nijo brewing beer barley was steeped to 42% using a conventional soaking process with alternate repetition of a step of soaking the barley in steeping water (soaking) and a step of removing the barley from the steeping water and allowing it to drain (draining). The steeping water temperature was kept constant at 16°C.

The steeping scheme was 10 hr (soaking)-8 hr (draining)-6 hr (soaking)-4 hr (draining)-3 hr (soaking)-2 hr (draining)-1 hr (soaking), and a total of 34 hours was required to reach a steeping degree of 42%.

The times required to reach a steeping degree of 42% for Examples 2 and 3 and Comparative Examples 2 and 3 are summarized in Table 2.

**[Table 2]**

| | Barley | Time required for steeping to reach a steeping degree of 42% (hr) |
|---|---|---|
| Example 2 | Ryofuu | 22 |
| Example 3 | AmagiNijo | 14 |
| Comparative Example 2 | Ryofuu | 46 |
| Comparative Example 3 | Amagi Nijo | 34 |

As shown in Table 2, the continuous soak steeping processes of Examples 2 and 3 shortened the time required for the barley to reach a steeping degree of 42% to 48% and 41% (about half) of the time required by the conventional steeping (soaking/draining) process.

### <Malt quality>

Malt analysis was performed by the following method to evaluate the quality of the soaked barley malt obtained in Example 2 and Comparative Example 2 above. First, the soaked barley (steeping degree: 42%) was malted by a germination step with a constant germination temperature of 16°C and a germination period of 6 days, and the quality of the obtained malt was analyzed based on the EBC Congress Method (see Analytica-EBC (1998) Verlag Hans Carl Getrankee-Fachverlag, Nurnberg(1998)). The results are shown in Table 3.

**[Table 3]**

| Analyzed properties | Example 2 (Continuous soak steeping process) | Comparative Example 2 (Conventional soaking/draining process) |
|---|---|---|
| Moisture (%) | 4.6 | 5.1 |
| Saccharification time (min) | <9 | <9 |
| Filtration speed (min) | <30 | <30 |
| Transparency | 1 | 1 |
| Color (EBC) | 3.0 | 2.7 |
| Boiling color (EBC) | 5.3 | 4.7 |
| Air-dried extract (%) | 78.4 | 78.7 |
| Anhydrous extract (%) | 82.2 | 83.0 |
| SN (%) | 0.734 | 0.717 |
| TN (%) | 1.757 | 1.759 |
| Glycoprotein (%) | 11 | 11 |
| KZ | 41.8 | 40.7 |
| EVG (%) | 84.7 | 83.4 |
| Enzyme power (° WK) | 241 | 285 |
| VZ4.5°C (%) | 42.5 | 38.1 |
| Viscosity (mPa·s) | 1.58 | 1.54 |
| Friability (%) | 75.1 | 79.8 |
| β-Glucan (mg/L) | 191 | 214 |

Comparison of the major analyzed components shown in Table 3 resulted in SN: 0.734 vs 0.717 (continuous soaking process vs. conventional process), KZ:41.8 vs 40.7 (continuous soaking process vs. conventional process), EVG:84.7 vs 83.4 (continuous soaking process vs. conventional process), β-glucan: 191 vs 214 (continuous soaking process vs. conventional process), enzyme power: 241 vs 285 (continuous soaking process vs. conventional process), friability: 75.1 vs 79.8 (continuous soaking process vs. conventional process). These results showed no significant difference in the malt quality values of Example 2 and Comparative Example 2 using the different steeping processes, and they were judged to be equivalent. Moreover, the results shown in Tables 2 and 3 demonstrated that the method of soaking grains in water of Example 2 wherein the steeping water temperature was kept at 30°C allowed a steeping degree of 42% to be reached in less than half the time required by the conventional steeping (soaking/draining) process, while producing malt with a malt quality comparable to that obtained with the conventional process.

This demonstrated that applying the continuous soak steeping process with increase of the steeping water temperature to 30°C allows the time required for pretreatment to be significantly shortened without impairing the quality of the prepared malt, thus further improving malt production efficiency.

### Industrial Applicability

According to the invention there is provided a method of soaking grains in water that allows the desired amount of moisture to be added to grains for germination in a shorter period of time without interfering with the normal germinating process, as well as a soaking apparatus used for the method. The invention can therefore reduce production costs for germinated grains.

## Claims

1. A method of soaking grains in water for adding moisture to grains for germination,
the method being **characterized by** soaking grains in water containing microbubbles with bubble diameters of no greater than 50 µm.

2. A method of soaking grains in water according to claim 1, **characterized in that** the temperature of the water used for soaking of the grains is between 21°C and 35°C.

3. A soaking apparatus used for adding moisture to grains for germination, the soaking apparatus comprising:
a vat which holds the grains and soaking water,
microbubble generating means that generates microbubbles with bubble diameters of no greater than 50 µm in the soaking water,
a circulation line having one end connected to the vat and the other end connected to the microbubble generating means, which supplies the soaking water in the vat to the microbubble generating means, and
a supply line having one end connected to the soaking water outlet of the microbubble generating means and the other end connected to the vat, for supply of the microbubble-containing soaking water to the vat.

4. A soaking apparatus according to claim 3, which further comprises:
soaking water temperature adjusting means that includes heating means to increase the temperature of the soaking water in the vat and cooling means to cool the soaking water in the vat, and
temperature control means that controls the soaking water temperature adjusting means to keep the soaking water in the vat at a prescribed temperature.
